(19) **Europäisches Patentamt**

**European Patent Office**

**Office européen des brevets**

(11) **EP 1 283 518 A1**

(12) **EUROPEAN PATENT APPLICATION**
published in accordance with Art. 158(3) EPC

(43) Date of publication:
**12.02.2003 Bulletin 2003/07**

(51) Int Cl.[7]: **G11B 5/65**, G11B 5/667,
G11B 5/84

(21) Application number: **01912430.4**

(22) Date of filing: **16.03.2001**

(86) International application number:
**PCT/JP01/02100**

(87) International publication number:
**WO 01/069595 (20.09.2001 Gazette 2001/38)**

(84) Designated Contracting States:
**AT BE CH CY DE DK ES FI FR GB GR IE IT LI LU
MC NL PT SE TR**

(30) Priority: **17.03.2000 JP 2000076021**

(71) Applicant: **TAKAHASHI, Migaku
Miyagi-ken 982-0222 (JP)**

(72) Inventors:
• **TAKAHASHI, Migaku
Sendai-shi, Miyagi-ken 982-0222 (JP)**

• **SAITO, Shin, Tohoku University, Faculty of Eng.
Sendai-shi, Miyagi 980-080 (JP)**
• **DJAYAPRAWIRA, David, Tohoku University
Sendai-shi, Miyagi 980-080 (JP)**

(74) Representative:
**Kahlhöfer, Hermann, Dipl.-Phys. et al
Patentanwälte
Kahlhöfer Neumann
Herzog Fiesser
Karlstrasse 76
40210 Düsseldorf (DE)**

(54) **VERTICAL MAGNETIC RECORDING MEDIUM AND METHOD FOR EVALUATING THE SAME**

(57)      A vertical magnetic recording medium and a method for evaluating the same by which the thickness of the microcrystalline texture part occupying the ferromagnetic layer in the recording layer of the medium can be grasped quantitatively along with the distribution thereof in the thickness direction and the crystal magnetic anisotropy constant $K_u^{grain-}$ of magnetic crystal grains in a columnar texture part can be determined simultaneously. The vertical magnetic recording medium is characterized in that the ferromagnetic layer (12) where the columnar texture part (14) is located on the microcrystalline texture part (13) is the recording layer and the microscrystalline texture part comprises microcrystals having c-axes oriented at random three-dimensionally. The method for evaluating the vertical magnetic recording medium is characterized in that the microcrystalline texture part (13) comprises microcrystals having c-axes oriented in random three-dimensionally and the crystal magnetic anisotropy constant $K_u^{grain}$ of magnetic crystal grain at the columnar texture part and/or the thickness $d^{ini}$ at the microcrystalline texture part (13) can be determined from the vertical magnetic anisotropy constant $K_u^-$ of the ferromagnetic layer (12) and the thickness $d^{Mag}$ of the ferromagnetic layer.

Fig. 8

**Description**

**Technical Field**

This invention relates to a perpendicular magnetic recording medium and a method for evaluating the same. More specifically, the invention relates to a perpendicular magnetic recording medium and a method for evaluating the same by which the proportion of the nanocrystalline structure part occupying the ferromagnetic layer in the recording layer can be quantitatively evaluated and the question of whether the magnetic crystal grain of the columnar structure formed thereon has the preferred magnetocrystalline anisotropy constant $K_u^{grain}$ or not can be determined at the same time.

The perpendicular magnetic recording medium related to this invention is used preferably in hard disks, floppy disks, magnetic tapes, etc.

**Background Art**

The magnetic recording media used on the current hard disk drives (HDD) and other magnetic recording devices adopt the longitudinal recording method by which magnetization is reversed in the longitudinal direction of the magnetic recording layer. In order to increase the recording density per unit area by this method, efforts have been made to develop media that allow shorter length of magnetization reversal, or improved linear recording density.

Up to now it has been known that an effective method of improving the linear recording density of longitudinal recording media is to shorten the length of magnitization reversal. In order to address to this problem, the medium is required to have a greater coercivity of the ferromagnetic layer, a lower residual magnetic flux density and a reduced thickness of the ferromagnetic layer.

However, any reduction in the thickness of the ferromagnetic layer for the purpose of improving linear recording density tend to result in smaller sizes of crystal grains that constitute the ferromagnetic layer and their smaller volume V. And when $K_uV$, the product of multiplying the anisotropy constant $K_u$ of magnetic crystal grains by their volume V becomes smaller than a certain level, it is feared that under the impact of heat the magnetizing orientation of magnetic grains would become unstable leading to the development of a "thermomagnetism relaxation phenomenon" and therefore the problem of so-called thermal decay.

Since this problem is all the more apparent the smaller the volume V of the crystal grain becomes; there is a mounting expectation for the development of a magnetic material having a high $K_u$ to maintain the stability of recording magnetization. To respond to this expectation, the inventor of this invention disclosed in Japanese Patent Application Hei 11(1999)-135038 (WO 00/70106) that a CoCrGe-based ferromagnetic metallic material of a prescribed distribution could realize a high $K_u$. And the inventor of this invention found that thermal decay can be controlled by reducing the distribution of grain diameter of crystal grains and disclosed in Japanese Patent Application Hei 11 (1999)-150424 (WO 00/74042) that a medium provided with a seed layer consisting of W or WCr is promising as a concrete means of realizing this.

On the other hand, a medium for the perpendicular recording method wherein magnetization is reversed at the right angle with the longitudinal medium to record data (hereinafter referred to as "perpendicular medium"), without causing the magnetization to face each other as in the case of longitudinal medium, has an advantage in that there is no need to reduce the thickness of the ferromagnetic layer constituting the recording layer. In other words, even if the size of crystal grains of the ferromagnetic layer is reduced, it is possible to gain an advantage on the volume V of crystal grains in the thickness direction by maintaining an appropriate thickness, and therefore it will be easy to maintain the thermal stability of the magnetizing orientation of magnetic grains. For this reason, the perpendicular recording method is attracting attention as a technical method that allows avoiding the problem of thermal decay that is feared when the longitudinal recording method is applied.

As a specific perpendicular medium, one made by coating a CoCr alloy (Cr = 10 - 18%) film as a recording layer on the substrate is known. [S. Iwasaki and K. Ouchi: IEEE Trans. Magn. MAG-14 (1978) 849; Literature 1]. It is reported that a recording layer consisting of a CoCr film deposited on the substrate by the sputtering deposition method comprises columnar fine grains is made of hcp crystals growing perpendicularly on the substrate surface, the average grain diameter thereof is 100 nm or less, and the c axes of the hcp crystals coincide more or less with the direction of the film growth.

In addition, a 2-layer film medium provided with a soft magnetic film of FeNi alloy that can be easily magnetized in the longitudinal direction is also proposed. [S. Iwasaki, Y. Nakanura and K. Ouchi: IEEE Trans. Magn. MAG-15 (1979) 1456; Literature 2]. As a result of analyses by means of the finite element method of the flow of magnetic flux at the time of recording and reproduction, it was found that 2-layer film medium consisting of a soft magnetic film and a recording layer allows writing in the recording layer of a stronger coercivity than a single layer medium consisting of only a recording layer, enables to increase reproduced voltage, and that the presence of this soft magnetic film brings about an increased magnetic field near the main magnetic pole due to the convergence at a high density of magnetic flux that develops from the main magnetic pole of the magnetic head in the space at the top of the main magnetic pole [Shun-ichi Iwasaki, Shinji Tanabe: Journal of the Telecommunications Society, J66-C (1983) 740; Literature 3].

In other words, the perpendicular medium described above, being less exposed to the effect of magnetization decay by demagnetizing fields than longitudinal medium and enabling to choose a thick film for the recording layer, is considered as a promising medium suitable for high density recording resistant to thermal decay.

However, in the case of perpendicular medium, depending on the manufacturing method, the formation of a structure which is in disorder called "initial layer" in the initial growing part of columnar structure which will be the recording layer of the medium is an issue [Tsutomu Tanaka, Kazuhiro Ouchi, Shun-ichi Iwasaki: Journal of the Japan Applied Magnetism, Vol. 10, No. 2 (1986) 65; Literature 4]. There is also a report on the analysis of this initial layer made by means of a computer simulation and the measurements of reproduced wave forms [Yoshihisa Nakamura, Ikuya Tagawa, Shun-ichi Iwasaki: Journal of the Japan Applied Magnetism, Vol. 11, No. 2 (1987) 119; Literature 5]. These two reports describe the method of analyses explaining that the initial layer can be easily magnetized in the longitudinal direction along the film surface, in other words c axes being oriented at random two-dimensionally, and in the columnar structure growing thereon c axes being oriented at the right angle to the film surface.

However, the reports on perpendicular media of Literatures 1 - 5 described above often discuss macroscopic changes in magnetic property and did not quantitatively evaluate the intrinsic magnetocrystalline anisotropy of the columnar structure and the equivalent anisotropic magnetic field thereto by eliminating the effect of the initial layer.

Therefore, in order to produce steadily and in a large quantity perpendicular media of the same quality, a great expectation has been placed on the development of a method by which the initial layer existing in the medium manufactured can be correctly identified and evaluated quantitatively and easily and the development of a medium to which such evaluation method can be applied.

The primary object of this invention is to provide a perpendicular magnetic recording medium by which the thickness of the nanocrystalline structure part occupying the ferromagnetic layer in the recording layer of the medium and the magnetocrystalline anisotropy constant $K_u{}^{grain}$ of magnetic crystal grains in the columnar structure formed thereon can be controlled and which can be fabricated stably in accordance with the preferred design conditions.

The second object of the invention is to provide a method for evaluating a perpendicular magnetic recording medium by which the thickness of the nanocrystalline structure part occupying the ferromagnetic part in the recording layer of the medium and the distribution thereof in the thickness direction can be quantitatively evaluated and the question of whether the magnetic crystal grains of the columnar structure part formed thereon has a preferred magnetocrystalline anisotropy constant $K_u{}^{grain}$ or not can be determined at the same time.

### Disclosure of the invention

The perpendicular magnetic recording medium related to this invention is a perpendicular magnetic recording medium wherein a ferromagnetic layer where the columnar structure part is located on the nanocrystalline structure part is the recording layer, and said nanocrystalline structure part comprises fine grains having c-axes oriented at random three-dimensionally.

The method for evaluating the perpendicular magnetic recording medium related to this invention is an evaluation method of the perpendicular magnetic recording medium wherein a ferromagnetic layer consisting of the columnar structure part overlying the nanocrystalline structure part is the recording layer, and when the thickness of said nanocrystalline structure part is defined as $d^{ini}$, the thickness of said ferromagnetic layer as $d^{Mag}$, the perpendicular magnetic anisotropy constant of said ferromagnetic layer as $K_u{}^{\perp}$, and the magnetocrystalline anisotropy constant of the magnetic crystal grains of said columnar structure part as $K_u{}^{grain}$, said nanocrystalline structure part comprises fine grains having c-axes oriented in random three-dimensionally and said $K_u{}^{grain}$ and/or said $d^{ini}$ can be determined from said $K_u{}^{\perp}$ and said $d^{Mag}$.

### Brief Descriptions of Drawings

Fig. 1 is a schematic cross-sectional view showing an example of perpendicular magnetic recording medium related to this invention.

Fig. 2 contains photographs showing the results of examination by a Transmission Electron Microscope (TEM) of microstructure in the cross-sectional direction of a medium related to this invention. Among these photographs, the photograph (a) is a cross-sectional TEM image of a test piece, (b) is a diffraction figure of a nanocrystalline structure part, and (c) is a diffraction figure of a columnar structure part.

Fig. 3 is a graph showing the XRD profile of a medium shown in Fig. 2.

Fig. 4 is a graph showing the result of measuring the perpendicular torque of various media made by changing the thickness of the ferromagnetic layer and the examples of determining the perpendicular magnetic anisotropy constant $K_u^\perp$ thereby.

Fig. 5 is a graph showing the relationship between $K_u^\perp$ and $d^{Mag}$ of the medium relâted to embodiment 1.

Fig. 6 is a graph showing the relationship between ($K_u^\perp \times d^{Mag}$) and $d^{Mag}$ of the medium related to embodiment 1.

Fig. 7 is an enlarged graph showing the tail portion (area indicated by slanting lines) where $d^{Mag}$ of the linear approximation portion in Fig. 6 can be found on the smaller side.

Fig. 8 is a schematic cross-sectional view showing an enlarged image of the rugged interface of the columnar structure part with the nanocrystalline structure part in a medium fabricated according to the construction shown in Fig. 1.

Fig. 9 is a schematic cross-sectional view showing another example of perpendicular magnetic recording medium related to this invention.

Fig. 10 is a graph showing the relationship between ($K_u^\perp \times d^{Mag}$) and $d^{Mag}$ of the medium related to embodiment 2.

Fig. 11 is a graph showing the relationship between ($K_u^\perp \times d^{Mag}$) and $d^{Mag}$ of the medium related to embodiment 3.

**Best Mode for Carrying out the Invention**

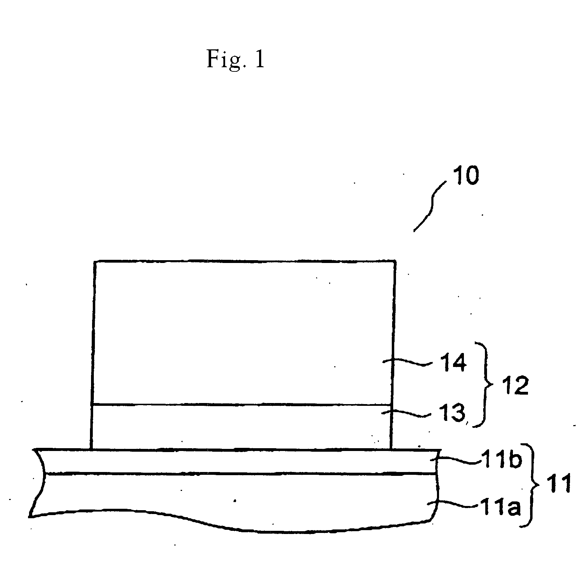

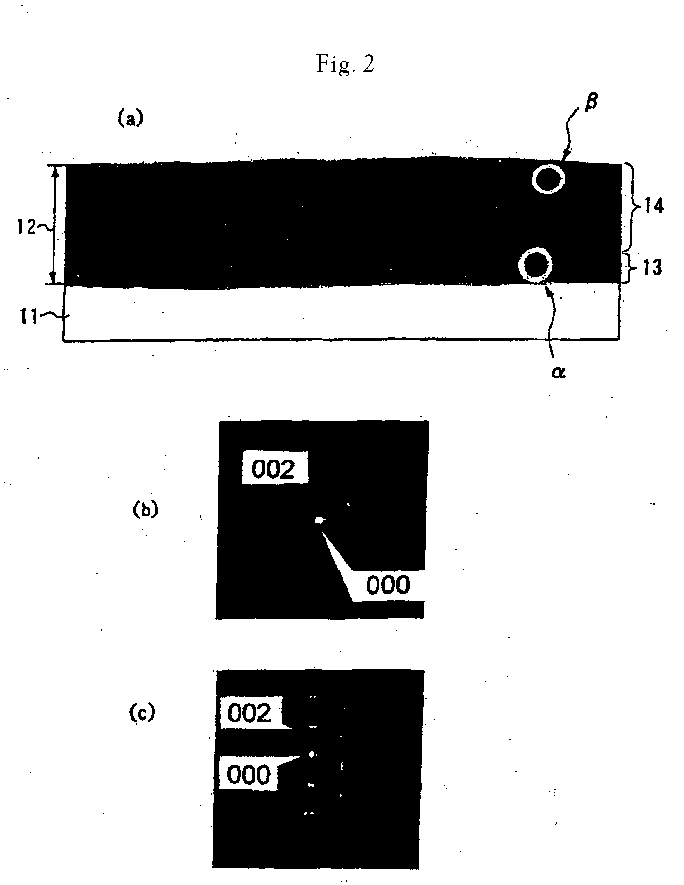

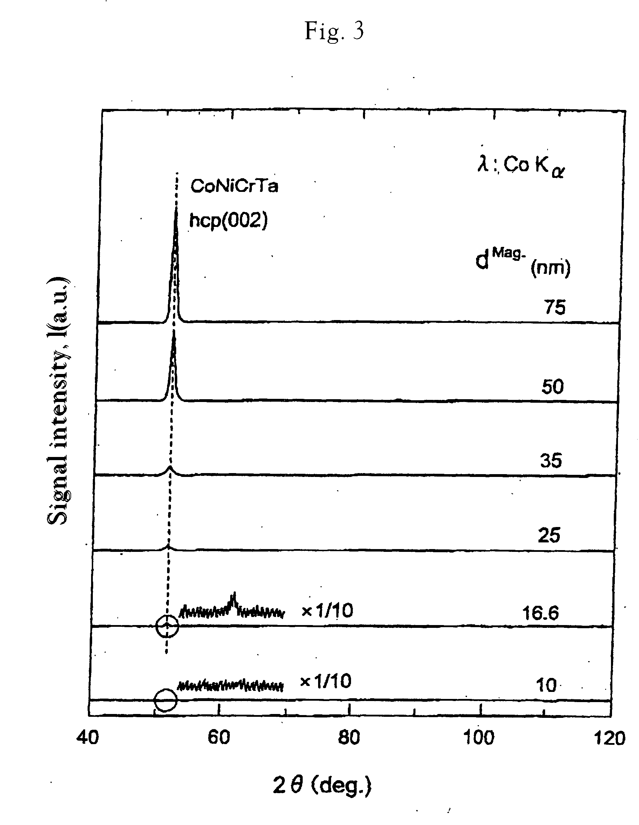

The perpendicular magnetic recording medium related to this invention is hereinafter explained with reference to a schematic cross-sectional view showing an example of medium related to this invention (Fig. 1), the results of examination with a transmission electron microscope (TEM) of the microstructure in the cross-sectional direction of the medium related with this invention (Fig. 2), and the results of examining with a X-ray diffractometer or XRD the orientation plane and the dispersion angle of the orientation plane normal line of the medium related to this invention (Fig. 3).

**(Perpendicular magnetic recording medium)**

As shown in Fig. 1, the perpendicular magnetic recording medium 10 related to this invention comprises a substrate base 11 and a ferromagnetic layer 12 mainly consisting of Co and Cr, and the ferromagnetic layer 12 functioning as a recording layer consists of a nanocrystalline structure part 13 and a columnar structure part 14 - located thereon.

The photographs shown in Fig. 2 represent the results of examination of the section of the medium having the structure of Fig. 1 with a TEM. To go further in details, the photograph (a) is a cross-sectional TEM image of a test piece made by directly depositing a CoNiCrTa film 50 nm thick as a ferromagnetic layer 12 on the substrate base 11 made of a glass substrate. The photographs (b) and (c) are electron diffraction figures obtained by the micro diffraction method. The photograph (a) shows that there is a gray contrasting structure in a layered form close to the substrate 11 of the ferromagnetic layer 12, and that a columnar structure overlies the structure. From the gray layered structure [region $\alpha$] ring-shaped diffraction figures (b) were obtained, and from the columnar structure [region $\beta$] spot-shaped diffraction figures (c) were obtained. Hereinafter, the former will be referred to as "the nanocrystalline structure part 13" and the latter will be referred to as "the columnar structure part 14."

Fig. 3 is the XRD profile of the medium shown in Fig. 2, and shows the results obtained from a medium made by changing the thickness of the ferromagnetic layer 12. On test pieces 10 nm thick no diffraction line can be observed. On the other hand, on test pieces 17 nm or more thick, as the film thickness increases, the diffraction line intensity from the c plane increases, and on any media no diffraction lines other than those from the c plane of the hcp structure could be observed.

From the results described above, the diffraction shown in Fig. 2 is deemed to have resulted from the diffraction from the c plane of the hcp - CoNiCrTa phase. This fact suggests that the gray layered structure, i.e., the nanocrystalline structure part 13 is composed of fine grains having c-axes oriented at random three-dimensionally and the columnar structure or the columnar structure part 14 comprises crystal grains oriented in the c plane.

In other words, on a perpendicular magnetic recording medium having the construction described above in which the nanocrystalline structure part 13 of the ferromagnetic layer 12 comprises fine grains having c-axes oriented at random three-dimensionally, it is possible to treat the perpendicular magnetic anisotropy constant $K_u^{\perp ini}$ of the nanocrystalline structure part 13 as zero.

Therefore, the evaluation method described below can be applied to the perpendicular magnetic recording medium related to this invention. This means that the medium related to this invention is a medium for which a clear determination of whether the medium manufactured has a preferred magnetic characteristic or not can be given. Specifically, it will be possible to clearly determine whether the medium manufactured has a film thickness $d^{ini}$ of the nanocrystalline structure part 13 according to the medium design or not and to control its characteristics.

By preparing a graph wherein the thickness $d^{Mag}$ of the ferromagnetic layer is shown in the horizontal axis

and the product ($K_u^\perp$ x $d^{Mag}$) obtained by multiplying the perpendicular magnetic anisotropy constant $K_u^\perp$ of the ferromagnetic layer by $d^{Mag}$ is shown in the perpendicular axis on a medium made according to a preferred medium design, a working curve consisting of the linear approximation can be obtained. In specific terms, the gradient of this linear approximation enables to determine the magnetocrystalline anisotropy constant $K_u^{grain}$ of the columnar structure part 14. On the other hand, the point of intersection between the extension of the linear approximation and the horizontal axis enables to determine the film thickness $d^{ini}$ of the nanocrystalline structure part 13 respectively.

Thus, in the case of the perpendicular magnetic recording medium related to this invention, in other words a medium wherein the ferromagnetic layer 12 comprising fine grains with c-axes oriented at random three-dimensionally is used as a recording layer, this invention will enable to establish a medium production line by which the conditions of forming film of the ferromagnetic layer, for example the composition ratio of the film, working temperature, process gas pressure, etc. can be precisely adjusted so that the media in the process of fabrication may have a $K_u^{grain}$ according to the medium design based on the information of the working curve described above.

**(Ferromagnetic layer)**

In the meanwhile, the above descriptions on media are based on the assumption that a CoNiCrTa film is used for the ferromagnetic layer 12. However, the ferromagnetic layer 12 of the medium related to this invention may include other elements for its constituent elements provided that it is a magnetic film composed mainly of Co and Cr and having a hexagonal close-packed structure or hcp the easy axis of which is oriented at the quasi right angle to the film surface. Specific materials that constitute the ferromagnetic layer 12 may include CoCr (Cr < 25 [at%]), CoNiCr, CoCrTa, CoCrPt, CoCrPtTa and other alloys. In order to control the grain diameter of crystal grains constituting the ferromagnetic layer 12, the segregation of the same, the magnetocrystalline anisotropy constant $K_u^{grain}$ of the columnar structure part 14, or the corrosion resistance of the ferromagnetic layer 12, in addition to the elements constituting the above-mentioned alloys, materials made from alloys containing suitable amounts of Fe, Mo, V, Si, B, Ir, W, Hf, Nb, Ru or elements selected from rare-earth elements may be used to form the ferromagnetic layer 12.

**(Metal base layer)**

The above description has been made with regard to a medium wherein the nanocrystalline structure part 13 constituting the bottom part of the ferromagnetic layer 12 is provided directly on top of the substrate 11. However, even on a medium wherein the nanocrystalline structure part 13 is mounted on the substrate 11 through one or more metal base layer(s) 15, the evaluation method related to this invention described below is applicable provided that it includes a nanocrystalline structure part 13 comprising fine grains with c-axes oriented at random three-dimensionally.

As the materials for the metal base layer 15, any material may be used provided that the ferromagnetic layer 12 formed thereon is a material having c plane orientation. The list of preferable materials includes single element materials such as Ti, W, Ta, etc., materials made by adding Cr and other dopant elements thereto, nonmagnetic materials such as CoCr (Cr $\geqq$ 25 [at %]), soft magnetic materials such as FeNi, CoZrNb, NiNbFe, FeAlSi, NiCuMoFe, etc., or hard magnetic materials such as SmCo prepared below these soft magnetic materials.

And, the metal base layer 15 prepared below the ferromagnetic layer 12 may, in addition to being laid as a single layer, be prepared in multiple layers as in the case of FeNi/Ti/FeNi or CoZrNb/SmCo.

**(Base substrate)**

The list of materials for the base substrate 11 related to this invention includes, for example, nonmagnetic base substrate 11a composed of aluminum, titanium and its alloys, silicon, glass, carbon, ceramic, plastic, resin and its polymers, and the same coated on the surface with a nonmagnetic coated film 11b made of a different material by the sputtering method, the deposition method, the plating method, etc.

It is preferable that the nonmagnetic coated film 11b deposited on the surface of the base substrate 11 would not be magnetized even at a high temperature, would be electrically conductive and easily machineable and yet its surface would have a certain hardness. As nonmagnetic coated films 11b meeting these conditions, NiP, NiTa, NiAl or NiTi films made by the sputtering method or the plating method are preferable.

Particularly in the case of the perpendicular magnetic recording medium, it is desirable to reduce the gap between the magnetic head and the medium in order to enable the magnetic head read well the signals written in the medium. In other words, when the magnetic head records and reproduces while remaining flying in the air, it is necessary to reduce the flying height. Or, if it is possible to record and reproduce by keeping the magnetic head in contact with the medium surface without allowing it to stay flying, it is more preferable. Therefore, as the material for the base substrate 11 for the perpendicular magnetic recording medium 11, materials providing a good surface flatness are preferable. In addition, the materials wherein the parallelism between the surfaces of the front and back sides, the undulation in the circumferential direction of the base substrate and the roughness of the surface are suitably controlled. From these points of view, preferred base substrates 11 include, for example, glass, silicon, aluminum substrate, or these base substrates covered with a coated film layer consisting of a NiP, NiTa, NiAl or NiTi film. Among these, the glass substrate is the most preferable because it is rigid enough to be able to face the task of reducing the thickness of the base substrate.

And the base substrate 11 may be provided with a buffer layer 11c designed to give unevenness on its surface layer in order to improve frictions, wears and tears when the surfaces of the medium 10 and the magnetic head (not shown) enter into contact and slide.

Furthermore, at the initial stage of growth of crystal grains constituting the ferromagnetic layer 12 and others accumulating thereon, the base substrate 11 may have a seed layer 11d in the form of a sporadically dotted island-like film in stead of a two-dimensional flat film on the surface layer as a layer serving as nuclei to promote the growth of crystals. Such a seed layer is expected to promote the miniaturization and the reduction in the diameter of the grains constituting the accumulated films formed thereon, as well as the reduced distribution of grain diameter.

Moreover, as a countermeasure for coming into contact and sliding (contact start stop, CSS) of the surface of the medium 10 and that of the magnetic head (not shown) when the base substrate 11 rotates and stops, generally concentric slight scratches (texture) may be created on the surface of the base substrate in the same way as the base substrate of the traditional longitudinal magnetic recording media.

**(Saturation magnetization: Ms, perpendicular magnetic anisotropy constant: Ku$^\perp$, film thickness of the recording layer: d$^{Mag}$)**

"Saturation magnetization: Ms" related to this invention is the saturation magnetization of the whole recording layer determined from the magnetization curve measured by using a vibrating sample magnetometer or VSM. And "perpendicular magnetic anisotropy constant $K_u^\perp$" is a uniaxial magnetic anisotropy constant in the perpendicular direction to the thin film determined by correcting for demagnetizing field the saturated value of sin 2 θ component of the perpendicular torque curve measured by using the high-sensitivity torque magnetometer described later. "Film thickness of the recording layer: d$^{Mag}$" used in the evaluation method related to this invention is the design film thickness of the recording layer defined by the product of multiplying the deposition rate by the deposition time previously identified. In this application specification, however, the ferromagnetic layer 12 wherein the columnar structure part 14 is located on top of the nanocrystalline structure part 13 corresponds to the recording layer.

**(Evaluation method of the perpendicular magnetic recording medium)**

The following is a description of the evaluation method of the perpendicular magnetic recording medium related to this invention.

This evaluation method is an evaluation method that uses the perpendicular magnetic anisotropy constant $K_u^\perp$ of the ferromagnetic layer composing the medium that has been determined by using for example a torque magnetometer in order to evaluate separately the magnetic structure of the nanocrystalline structure part 13 and the columnar structure part 14 forming the ferromagnetic layer.

Here, the case of using a torque magnetometer is described in details. However, the method of analyzing the perpendicular magnetic anisotropy constant $K_u^\perp$ of the perpendicular magnetic film from the longitudinal loop observed by means of a Kerr Loop Tracer or KLT that takes advantage of the magnetic Kerr effect or the VSM described above may be used. Such methods include, for example, the method of calculating the perpendicular magnetic anisotropy constant $K_u^\perp$ from the anisotropic magnetic field Hk determined from the saturation magnetic field Ms [Kazuhiro Ouchi; doctoral thesis at Tohoku University for 1984; Literature 6, C. Byun, J.M. Sivertsen and J.H. Judy: J. Appl. Phys., vol. 57 (1985) 3997; Literature 7] and Sucksmith-Thompson Method [W. Sucksmith and J.E. Thompson: "The magnetic anisotropy of cobalt", Proc. Roy. Sco., vol. A225 (1954) 362; Literature 8].

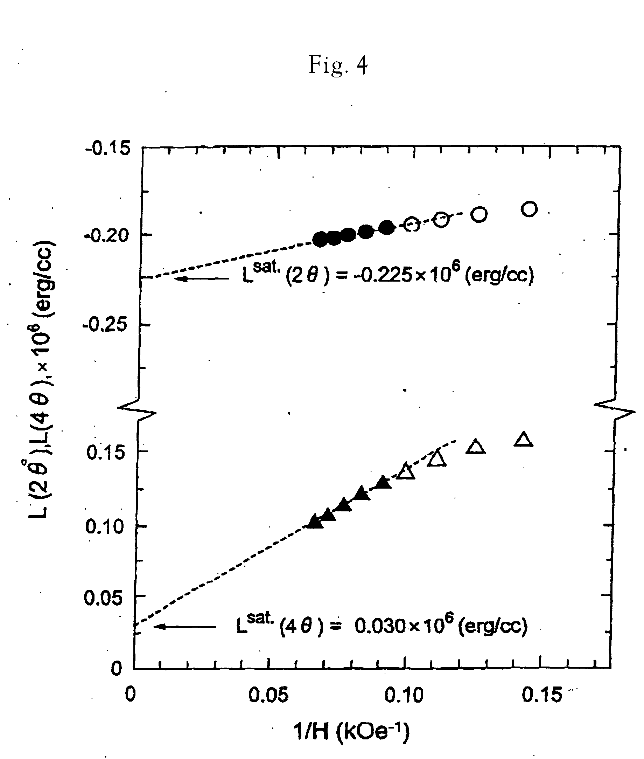

Fig. 4 is a graph showing the results of-measuring the perpendicular torque of media made by changing the thickness of the ferromagnetic layer 12 of the medium 10 having a structure shown in Fig. 1 by using a self-made high sensitivity torque magnetometer (effective sensitivity: 3 x 10$^{-3}$ [dyn · cm]) and an example of determining the perpendicular magnetic anisotropy constant $K_u^\perp$ therefrom.

As shown in Fig. 4, the saturation value for the sin 2θ component of the torque curve L$^{sat}$ (2θ) is determined from the results of plotting L(2 θ) with reference to 1/H and of making a linear extrapolation to zero on the 1/H axis (hereinafter referred to as "the extrapolation method"). When the demagnetizing field is taken into account, $K_u^\perp$ can be given as follows:

$$K_u^\perp = L^{sat}(2\theta) + 2\pi Ms^2$$

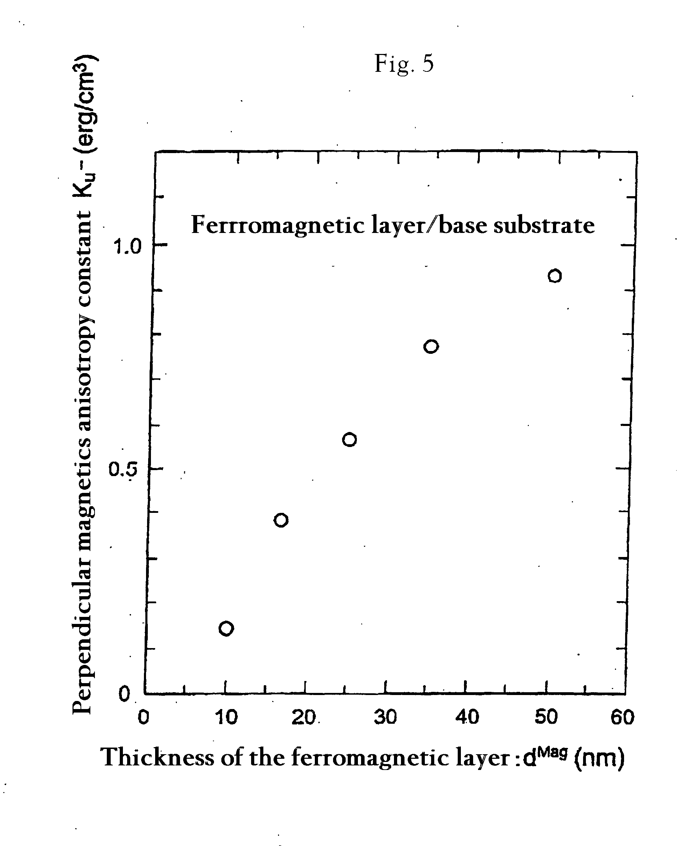

This operation of determining $K_u^{\perp}$ is repeated for each of various media having a ferromagnetic layer 12 of different thickness, and the result is summarized in the graph of Fig. 5 showing the relationship between the perpendicular magnetic anisotropy constant $K_u^{\perp}$ and the thickness $d^{Mag}$ of the ferromagnetic layer 12.

Fig. 5 shows that the value of the perpendicular magnetic anisotropy constant $K_u^{\perp}$ rises gradually as the film thickness $d^{Mag}$ of the ferromagnetic layer 12 increases, and that it shows a saturating trend when the film thickness $d^{Mag}$ reaches 35 nm or more. However, the graph of Fig. 5 does not allow us to read the thickness $d^{ini}$ of the nanocrystalline structure part composing the base substrate nor the magnetocrystalline anisotropy constant $K_u^{grain}$ of the magnetic crystal grains in the columnar structure part.

Therefore, taking into account the existence of the nanocrystalline structure part 13 clearly shown in Fig. 2, the phenomena of $K_u^{\perp}$ showing a saturating trend with regard to the thickness of the ferromagnetic layer 12 will be described.

As described above, the medium related to this invention allocates the ferromagnetic layer 12 wherein the columnar structure part 14 lies above the nanocrystalline structure part 13 as the recording layer. Therefore, in order to discuss the effect of the nanocrystalline structure part 13 on the magnetic property of the medium, it is necessary to evaluate separately the magnetic structure of the nanocrystalline structure part 13 and the columnar structure part 14.

And as a result of observation of the cross-sectional structure by using a TEM, it has become apparent that the columnar structure part 14 comprises crystal grains oriented in the c plane, while the nanocrystalline structure part 13 comprises fine grains having c axes oriented at random three-dimensionally.

Therefore, the perpendicular magnetic anisotropy. constant $K_u^{\perp}$ of the medium obtained as a result of torque measurements, which is observed as the total sum of contributions from the columnar structure part 14 and the nanocrystalline structure part 13, can be determined by the following formula by using the perpendicular magnetic anisotropy constant $K_u^{\perp column}$ of the columnar structure part 14 and the perpendicular magnetic anisotropy constant $K_u^{\perp ini}$ of the nanocrystalline structure part 13:

$$K_u^{\perp} = K_u^{\perp column} \times (V^{Mag} - V^{ini})/V^{Mag} + K_u^{\perp ini} \times V^{ini} / V^{Mag} \qquad (1)$$

Provided that, however, $V^{Mag}$ is the total volume of the ferromagnetic layer 12, $V^{ini}$ is the total volume of the nanocrystalline structure part 13. Supposing that the film area is S, the thickness of the nanocrystalline structure part 13 is $d^{ini}$ based on the assumption that the nanocrystalline structure part 13 is flat,

$$V^{Mag} = S \times d^{Mag}$$

$$V^{ini} = S \times d^{ini}.$$

Therefore, the formula (1) given above is replaced by the following formula:

$$K_u^{\perp} = K_u^{\perp} column \times (d^{Mag} - d^{ini})/d^{Mag} + K_u^{\perp ini} \times d^{ini} / d^{Mag} \qquad (2)$$

As Fig. 2 shows clearly, as the nanocrystalline structure part 13 comprises nanocrystalline grains with c axes oriented at random in the three-dimensional space, the total perpendicular magnetic anisotropy due to individual fine grains offsets each other, and approximates as follows:

$$K_u^{\perp ini} = 0$$

On the other hand, since the perpendicular magnetic anisotropy of the columnar structure part 14 is equal to the magnetocrystalline anisotropy of single crystal grains constituting each columnar structure,

$$K_u^{\perp column} = K_u^{grain}$$

Therefore, when $d^{ini}$ is not zero, the formula (2) above can be expressed as follows:

$$K_u^\perp \times d^{Mag} = 0 \tag{3}$$

$$K_u^\perp \times d^{Mag} = K_u^{grain} \times (d^{Mag} - d^{ini}) \tag{4}$$

The formula (3) given above represents the case where the ferromagnetic film 12 has no columnar structure part 14 and is wholly composed of the nanocrystalline structure part 13. It can be determined by replacing the relationship of $d^{Mag} = d^{ini}$. On the other hand, when the ferromagnetic film 12 consists of the nanocrystalline structure part 13 and the columnar structure part 14, in other words when the thickness $d^{ini}$ of the nanocrystalline structure part 13 is characterized by the relationship of $0 < d^{ini} < d^{Mag}$, the formula (4) given above becomes effective.

The formula (4) given above can be rendered in a linear approximation when the values of $K_u^\perp \times d^{Mag}$ are plotted along the vertical axis and those of $d^{Mag}$ along the horizontal axis. It means that the gradient of the linear approximation enables to determine the magnetocrystalline anisotropy $K_u^{grain}$ of magnetic crystal grains of the columnar structure part 14. On the other hand, it also signifies that the point of intersection between the extension of the linear approximation and the horizontal axis enables to determine the film thickness $d^{ini}$ of the nanocrystalline structure part 13.

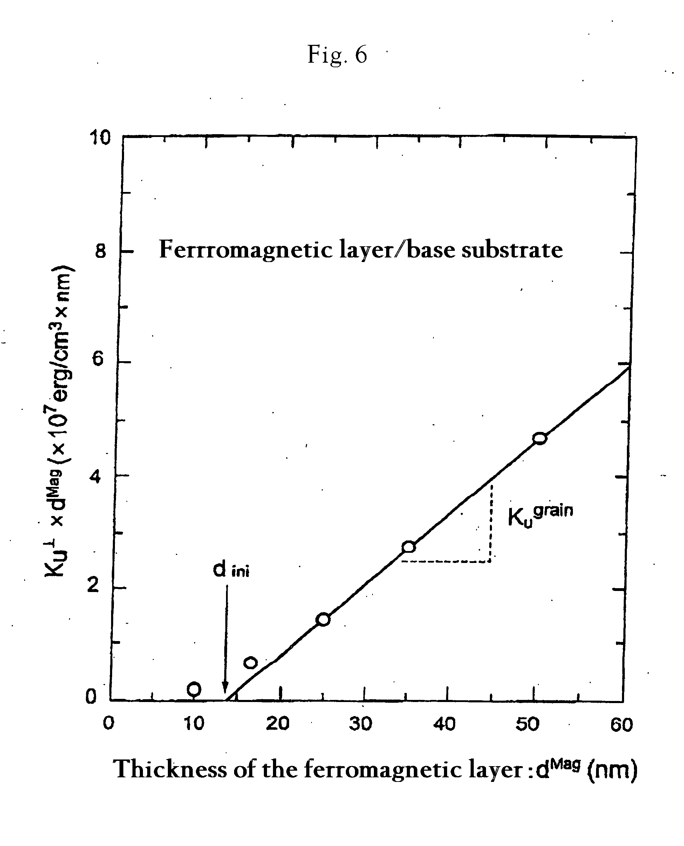

Fig. 6 is a graph based on the results shown in Fig. 5 showing ($K_u^\perp \times d^{Mag}$) on the vertical axis and the thickness of the ferromagnetic layer $d^{Mag}$ on the horizontal axis. The result of Fig. 6 is an example corresponding to the formula (4) given above, and it is possible to read respectively $K_u^{grain}$ = 1.8 [$\times 10^6$ erg/cm$^3$] from the gradient of the linear approximation, and $d^{ini}$ = 7.5 [nm] from the intercept of the horizontal axis.

As the formula (4) given above shows clearly, however, when the thickness of the nanocrystalline structure part 13 is infinitely close to zero, it is needless to say that we should consider $d^{ini}$ = 0 and the following formula can be applied for analyses.

$$K_u^\perp \times d^{Mag} = K_u^{grain} \times d^{Mag} \tag{5}$$

The formula (5) given above suggests that, even under the condition where the thickness of the nanocrystalline structure part 13 allows a zero approximation, the gradient of the linear approximation enables to determine the magnetocrystalline anisotropy $K_u^{grain}$ of magnetic crystal grains of the columnar structure part 14.

So far, detailed descriptions have been given based on formula expansion focussing attention on film thickness $d^{Mag}$ and $d^{ini}$. However, it is needless to say that area and volume can be taken to expand formulae in place of film thickness, to prepare graphs thereby and to determine likewise $K_u^{grain}$ and $d^{ini}$. However, these graphs do not allow us to read directly $d^{ini}$, and it will be necessary to calculate the values read. The method related to this invention, on the other hand, adopts a formula expansion focussing attention on film thickness $d^{Mag}$ or $d^{ini}$, presents the same in graphs and thus has the advantage of enabling the readers to read directly $K_u^{grain}$ or $d^{ini}$ from the gradient of the linear approximation and the intercept of the horizontal axis.

In other words, the evaluation method of media related to this invention can be described as follows:

(1) The perpendicular magnetic recording medium wherein the ferromagnetic layer consisting of the columnar structure part overlying the nanocrystalline structure part serves as the recording layer is characterized by the nanocrystalline structure part comprising fine grains having c-axes oriented at random three-dimensionally. Therefore, by determining the magnetocrystalline anisotropy constant $K_u^{grain}$ of magnetic crystal grains of the columnar structure part and/or the thickness of the nanocrystalline structure part dint from the perpendicular magnetic anisotropy constant $K_u^\perp$ and the thickness of the ferromagnetic layer $d^{Mag}$, the evaluation method of medium related to this invention enables to analyze separately the thickness and magnetic property of the nanocrystalline structure part and the columnar structure part that could not be analyzed separately by the past evaluation method.

(2) When the thickness of the nanocrystalline structure part $d^{ini}$ is greater than zero, by using the formula $K_u^\perp \times d^{Mag} = K_u^{grain} \times (d^{Mag} - d^{ini})$, the magnetocrystalline anisotropy constant Kugrain of the recording medium and/or the thickness of the nanocrystalline structure part $d^{ini}$ can be determined from the perpendicular magnetic anisotropy constant $K_u^\perp$ and the thickness of the ferromagnetic layer $d^{Mag}$. In other words, when the nanocrystalline structure part is present, its thickness $d^{ini}$ and the magnetocrystalline anisotropy constant $K_u^{grain}$ can be quantitatively evaluated.

(3) Regarding the description of the subparagraph (2) above, it is possible to visually obtain $K_u^{grain}$ and/or $d^{ini}$ by utilizing the linear approximation of the graph in which the aforementioned $d^{Mag}$ is plotted on the horizontal axis and the product of the aforementioned $K_u^\perp$ and the aforementioned $d^{Mag}$ is plotted on the vertical axis. And if the reference line of the linear approximation is previously determined in the standard test piece, depending on which direction, upper or lower from this reference line and to what extent the test piece of the prescribed film thickness deviates, it will be possible to assume the cause of the deviation. This will be an effective means to precisely control the deposition condition of medium and to mass-produce a medium having preferred magnetic property.

(4) From the gradient of the linear approximation in the graph mentioned in the subparagraph (3) above, the magnetocrystalline anisotropy constant $K_u^{grain}$ of magnetic crystal grains of the columnar structure part can be determined.

(5) From the point of intersection between the extension of the linear approximation shown in the graph mentioned in the subparagraph (3) above and the aforementioned horizontal axis, the thickness $d^{ini}$ of the nanocrystalline structure part can be determined.

In other words, it will be possible to strictly control the value of magnetic property of the medium manufactured by correctly determining said gradient or point of intersection.

(6) In addition, when the thickness $d^{Mag}$ of the linear approximation in the graph mentioned in subparagraph (3) above has a tail to the smaller side of value, from the aforementioned tail part the distribution in the thickness direction of the aforementioned nanocrystalline structure part can be determined. By taking account of this distribution, the interfacial condition between the nanocrystalline structure part and the columnar structure part can be evaluated. Therefore, the information on this interfacial condition will be an effective means to precisely control the deposition conditions of medium and to mass-produce a medium having a preferred magnetic property.

(7) When the thickness $d^{ini}$ of the nanocrystalline structure part is zero, by using the formula $K_u^{\perp} \times d^{Mag} = K_u^{grain} \times d^{Mag}$, the magnetociystalline anisotropy constant $K_u^{grain}$ of magnetic crystal grains of the columnar structure part can be determined from the perpendicular magnetic anisotropy constant $K_u^{\perp}$ of the ferromagnetic layer and the thickness $d^{Mag}$ of the ferromagnetic layer. In other words, even when the nanocrystalline structure part is absent, the magnetocrystalline anisotropy constant $K_u^{grain}$ of magnetic crystal grains of the columnar structure part can be quantitatively evaluated.

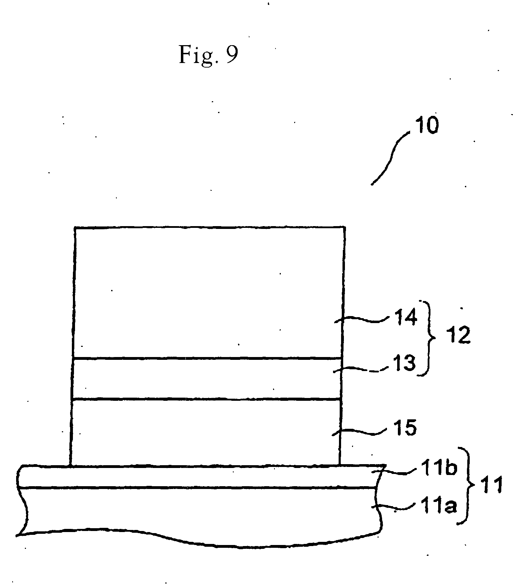

The above description has been made by taking up the case of the medium shown in Fig. 1, in other words the medium wherein the nanocrystalline structure part 13 overlies directly the base substrate 11. However, similar functions and effects can be obtained from other constructions. For example, a medium wherein the nanocrystalline structure part 13 shown in Fig. 9 is prepared on the base substrate 11 through a metal base layer 15 can be mentioned.

**Embodiment**

Some embodiments are given below to describe in more details this invention. However, this invention is not limited to these embodiments.

**(Embodiment 1)**

In this embodiment, the case of applying the evaluation method related to this invention to a perpendicular magnetic recording medium wherein a CoNiCrTa film is directly applied on the base substrate as a ferromagnetic layer as shown in Fig. 1 will be described.

The ferromagnetic layer of said medium was fabricated by using a sputtering deposition apparatus having a back pressure condition of about $10^{-7}$ [Torr] which is almost the same as the condition used for mass production. The base substrate temperature during the fabrication process was maintained at 250 [°C], Ar gas was used as the process gas and the gas pressure was maintained at 2 - 4 [mTorr]. Media wherein the thickness of the ferromagnetic layer varied within a range of 10 - 50 [nm] were fabricated by changing the deposition time. A disk-shaped glass substrate was used for the base substrate, and a Co - 13 at % Ni - 16 at % Cr - 4 at % Ta alloy target (purity: 3N) was used for the target for depositing the ferromagnetic layer.

The disk-shaped media manufactured were transformed into circular test pieces of 8 mm in diameter by means of an ultrasonic processing machine (made by Choonpa Kogyo K.K., model M100).

The dispersion angle of the orientation plane and the orientation plane normal line of the film made on the base substrate were analyzed by the X-ray diffraction method (XRD: made by Rigaku Denki K.K., model RAD-B). The microstructure in the cross-sectional direction of the film was analyzed by using bright-field images and electron diffraction images obtained by a transmission electron microscope or TEM (made by Nippon Denshi K.K., models JEM-2000 EX, JEM-2000 FX).

The saturation magnetization of test pieces was measured by using a vibrating sample magnetometer or VSM (made by Riken Denshi K.K., model BHV-35).

And perpendicular magnetic torque was measured by the aforementioned extrapolation method by using a self-made high sensitivity torque magnetometer. For this measurement, the effective sensitivity was set at $3 \times 10^{-3}$ [dyn

· cm], the applied magnetic field was set at 15 [kOe], and the rotation speed of the magnetic field was set at two degree/sec.

Fig. 2 is a set of photographs showing the results of examination of the microstructure in the cross-sectional direction of the medium related to this invention by means of a TEM. Among them (a) is a bright field image of the section of a test piece made by directly depositing a CoNiCrTa film 50 nm thick as a ferromagnetic layer 12 on the base substrate 11 consisting of a glass substrate. The photographs (b) and (c) are electron diffraction figures made by the micro diffraction method. The photograph (b) shows the result of examining the gray layered structure [region $\alpha$] in the photograph (a), and the photograph (c) shows the result of examining the columnar structure [region $\beta$] in the photograph (a).

Fig. 2(a) shows that on the side of the ferromagnetic layer 12 closer to the base substrate 11 there is a gray contrasted layered structure, and that a columnar structure overlies that structure. Hereinafter the former shall be referred to as the "nanocrystalline structure part 13" and the latter as the "columnar structure part 14."

From the nanocrystalline structure part 13 ring-shaped diffraction figures (b) were obtained, and from the columnar structure part 14 spot-shaped diffraction figures were obtained. These diffraction figures are deemed to have resulted from the diffraction from hcp (002) or c plane of the hcp structure. Therefore, said diffraction figures suggest that the nanocrystalline structure part 13 comprises fine grains with c axes oriented at random three-dimensionally, and that the columnar structure part 14 located on top of the same comprises a single crystal grain oriented in the c plane.

Fig. 3 is a XRD profile of the medium shown in Fig. 2, and shows the result of examination of media made by changing the thickness of the ferromagnetic layer 12. On a test piece 10 nm thick, no diffraction line was observed. On test pieces 17 nm or more thick, on the other hand, the intensity of diffraction lines from the c plane increased as the film thickness increased, and no diffraction lines other than those from the c plane of the hcp structure were observed on any medium. The measurement of the rocking curve showed that the dispersion angle of crystal grains oriented in the c plane was 8.0 degree or less.

In short, it has become evident that, on perpendicular magnetic recording media of the aforementioned composition wherein the nanocrystalline structure part 13 of the ferromagnetic layer 12 comprises fine grains with c axes oriented at random three-dimensionally, the perpendicular magnetic anisotropy constant $K_u^{\perp ini}$ of the nanocrystalline structure part 13 as being zero.

Therefore, as described in the best mode of carrying out the invention, the perpendicular magnetic recording medium wherein the ferromagnetic layer composed of the columnar structure part 14 overlying the nanocrystalline structure part 13 serves as the recording layer comprises fine grains having c-axes oriented at random three-dimensionally in said nanocrystalline part when the thickness of the nanocrystalline part is defined as $d^{ini}$, the thickness of the ferromagnetic layer as $d^{Mag}$, the perpendicular magnetic anisotropy constant of the ferromagnetic layer as $K_u^{\perp}$, and the magnetocrystalline anisotropy constant of magnetic crystal grains of the columnar structure part as $K_u^{grain}$. Therefore, it will be possible to determine $K_u^{grain}$ and/or $d^{ini}$ from $K_u^{\perp}$ and $d^{Mag}$, by setting the value of $K_u^{\perp ini} = 0$. This is due to the fact that the relational expression $K_u^{\perp} \times d^{Mag} = K_u^{grain} \times (d^{Mag} - d^{ini})$ is valid.

Fig. 5 is a graph showing the relationship between the perpendicular magnetic anisotropy constant $K_u^{\perp}$ of the medium manufactured by this embodiment and the thickness of the ferromagnetic layer $d^{Mag}$. Fig. 5 shows that the value of the perpendicular magnetic anisotropy constant $K_u^{\perp}$ gradually increases as the film thickness $d^{Mag}$ of the ferromagnetic layer increases and that when the film thickness $d^{Mag}$ reaches 35 nm or more, it shows a saturating trend.

Fig. 6 is a graph prepared based on the result shown in Fig. 5 showing ($K_u^{\perp} \times d^{Mag}$) in the vertical axis and the thickness of the ferromagnetic layer $d^{Mag}$ in the horizontal axis. It is possible to use the linear approximation of the graph shown in Fig. 6 to determine $K_u^{grain}$ and / or $d^{ini}$. In other words, as said relational expression $K_u^{\perp} \times d^{Mag} = K_u^{grain} \times (d^{Mag} - d^{ini})$ is valid, the gradient of the linear approximation enables to determine $K_u^{grain}$, and the point of intersection between, the extension of the linear approximation and the aforementioned horizontal axis enables to determine $d^{ini}$. From Fig. 6, it is possible to read that $K_u^{grain} = 1.3 [\times 10^6 \text{ erg/cm}^3]$ and $d^{ini} = 14.0$ [nm].

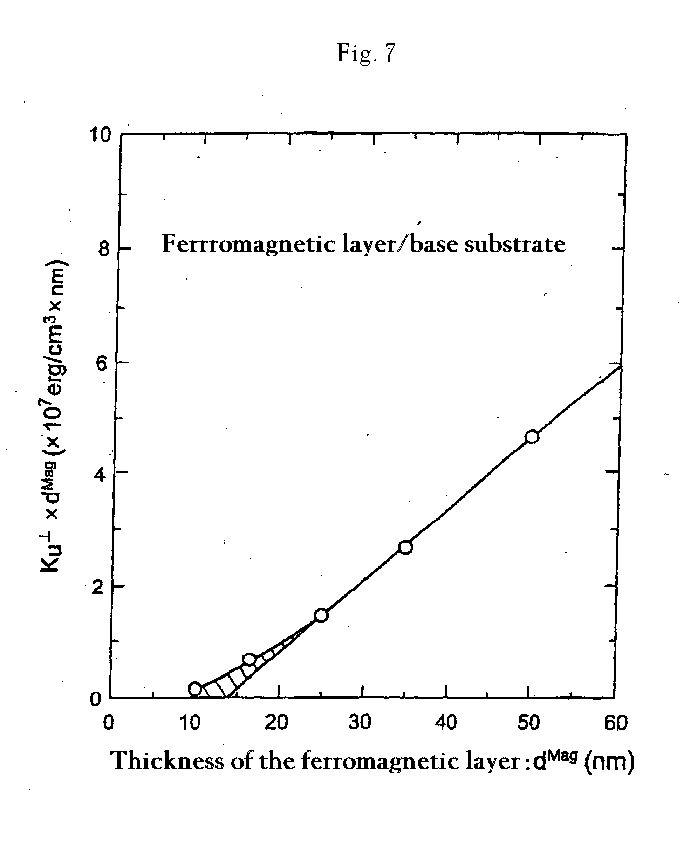

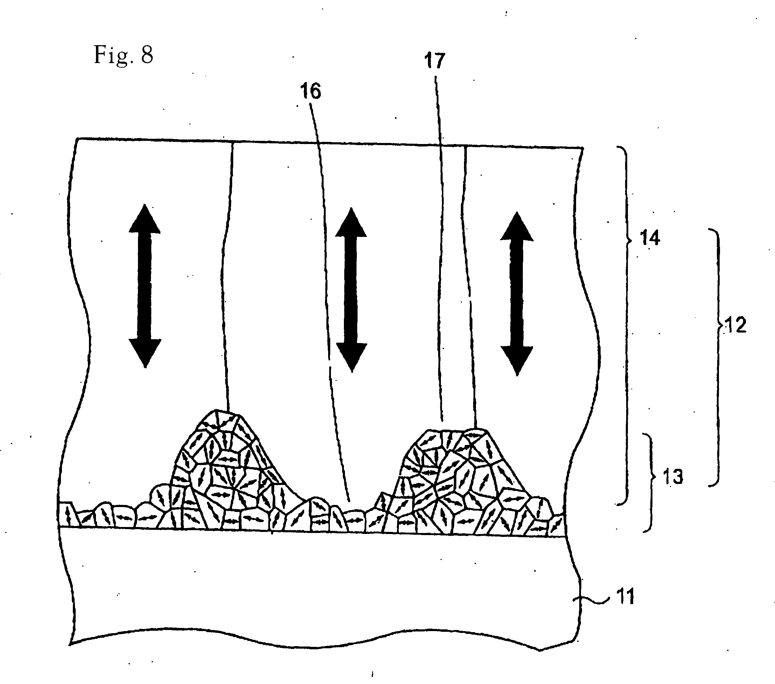

And as shown in Fig. 7, the medium fabricated for this embodiment has a tail part (the region indicated by oblique lines) on the side where the value $d^{Mag}$ of the linear approximation is smaller. This suggests that, as shown in the schematic cross-sectional view of Fig. 8, the interface of the nanocrystalline structure part 13 with the columnar structure part 14 is rugged and that height differences in the direction of the film thickness among the concave parts 16 and the convex parts 17 are considerable. Therefore, it will be possible to determine the distribution in the thickness direction of the nanocrystalline structure part 13 by evaluating quantitatively this tail part. Incidentally, the arrows in Fig. 8 show the direction of c axes.

**(Embodiment 2)**

In this embodiment, as shown in Fig. 9, the case of applying the evaluation method related to this invention to the perpendicular magnetic recording medium wherein a metal base layer 15 is prepared between the base substrate 11 and the ferromagnetic layer 12 will be described. For this evaluation process, a variety of media wherein the thickness $d^{Mag}$ of the ferromagnetic layer 12 varies within a range of 10 - 50 [nm] were fabricated. However, a Ti film was used for the metal base layer 15 and its thickness was fixed at 7.5 [nm].

In other words, the medium related to this invention consists of the nanocrystalline structure part 13 underlying the ferromagnetic layer 12 overlies the base substrate 11 through the metal base layer 15.

The other points remained the same as the embodiment 1.

Like the embodiment 1, as a result of examining the microstructure in the cross-sectional direction of the medium fabricated with a TEM, it was found that the ferromagnetic layer 12 that had been deposited consisted of the nanocrystalline part 13 and the columnar structure part 14 overlying thereon.

Then, the perpendicular magnetic anisotropy constant $K_u^{\perp}$ of the medium fabricated was determined by using a high sensitivity torque magnetometer in the same way as the embodiment 1.

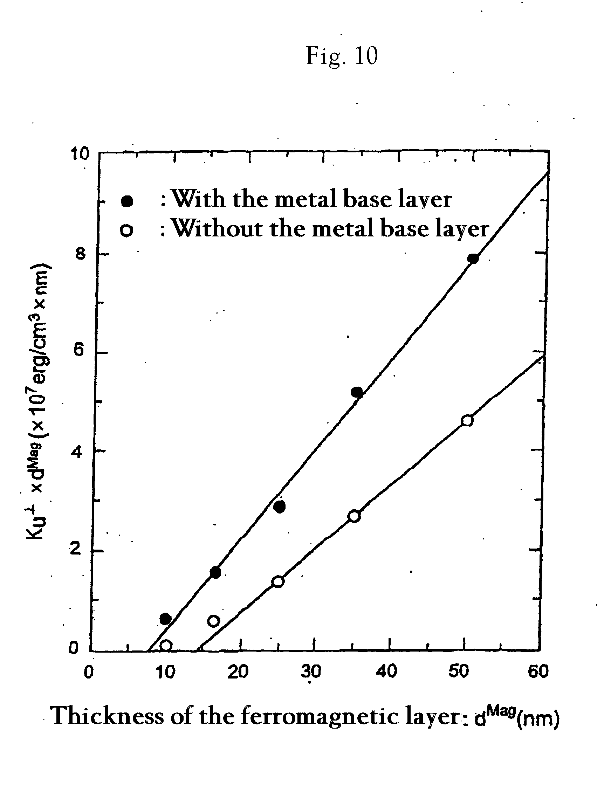

Fig. 10 is a graph showing ($K_u^{\perp} \times d^{Mag}$) of the medium fabricated for this embodiment in the vertical axis and the thickness of the ferromagnetic layer $d^{Mag}$ in the horizontal axis. In Fig. 10, the mark● indicates the result of examination of a medium fabricated according to this embodiment with the metal base layer, and the mark○ indicates the result of examination of a medium according to the embodiment 1 without the metal base layer mentioned for reference.

From Fig. 10, it was confirmed that even on media having respectively a metal base layer 15 the linear approximation method could be applied to each plot. And by using this linear approximation in the same way as the embodiment 1, the media fabricated according to this embodiment and each having a metal base layer (marked ●) could be quantitatively evaluated as having the values of $K_u^{grain}$ = 1.8 [ $\times 10^6$ erg/cm$^3$], $d^{ini}$ = 7.4 [nm], etc. On the other hand, the media fabricated according to the embodiment 1 without the metal base layer (marked ○) had values of $K_u^{grain}$ = 1.3 [ $\times 10^6$ erg/cm$^3$], $d^{ini}$ = 14.0[nm]. Therefore, it was confirmed that the introduction of a metal base layer would enable to fabricate media wherein the nanocrystalline structure part 13 is thin, and the perpendicular magnetic anisotropy constant $K_u^{\perp}$ of magnetic crystal grains of the columnar structure part is high.

And on the media fabricated according to this embodiment and each having a metal base layer 15, almost no tail parts were found on the side where the value $d^{Mag}$ of the linear approximation is small. From this, it was confirmed that the introduction of the metal base layer 15 is an effective means for leveling the interface between the nanocrystalline structure part 13 and the columnar structure part 14 formed thereon.

**(Embodiment 3)**

In this embodiment, the case of applying the evaluation method related to this invention to media of the layered structure shown in Fig. 1 fabricated by using CoCr, CoNiCr, CoCrTa, CoCrPt instead of a magnetic material CoNiCrTa constituting the ferromagnetic layer 12 in the embodiment 1 will be described. In this process, a number of media wherein the thickness $d^{Mag}$ of the ferromagnetic layer 12 varied within a range of 10 - 50 [nm] were fabricated by changing the deposition time in the same way as the embodiment 1.

In other words, all the media related to this invention had the nanocrystalline structure part 13 underlying the ferromagnetic layer 12 directly overlies the base substitute 11.

The other points were same as the embodiment 1.

The perpendicular magnetic anisotropy constant $K_u^{\perp}$ of each medium fabricated was determined by using a high sensitivity torque magnetometer.

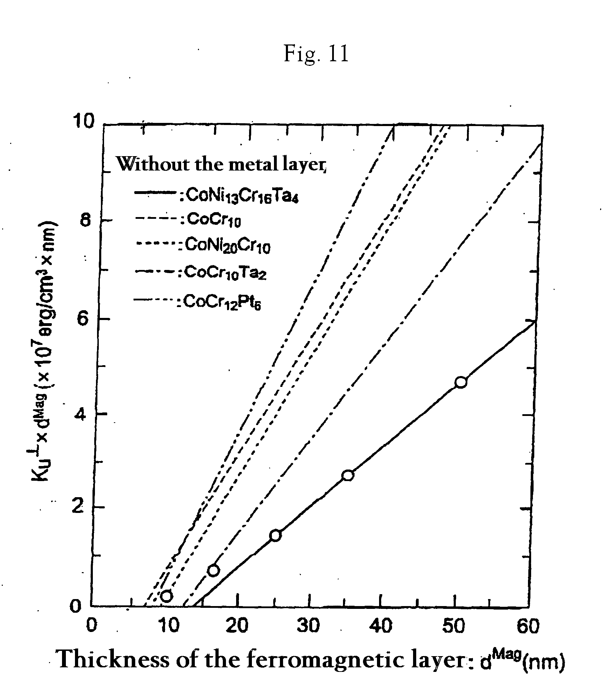

Fig. 11 is a graph showing ($K_u^{\perp} \times d^{Mag}$) of each medium fabricated according to this embodiment on the vertical axis and the thickness $d^{Mag}$ of the ferromagnetic layer of the same on the horizontal axis. From Fig. 11, it was confirmed that on any media comprising the ferromagnetic layer 12 made of any magnetic material chosen from among CoCr, CoNiCr, CoCrTa or CoCrPt the linear approximation method could be applied to any plots.

And like the embodiment 1, by using this linear approximation, as is shown on Table 1 below, the magnetocrystalline anisotropy constant $K_u^{grain}$ of magnetic crystal grains of the columnar structure part in each medium and the thickness $d^{ini}$ of the nanocrystalline structure part could be read respectively from the gradient shown in Fig. 11 and the intercept of the horizontal axis.

[Table 1]

| Magnetic material | $K_u^{grain}$ [x 106 erg/cm$^3$] | $d^{ini}$ [nm] |
|---|---|---|
| Co-10at%Cr | 2.5 | 7.2 |
| Co-20at%Ni-10at%Cr | 2.6 | 9.6 |
| Co-10at%Cr-2at%Ta | 2.0 | 12.5 |
| Co-12at%Cr-6at%Pt | 3.1 | 8.1 |
| Co-13at%Ni-16at%Cr-4at%Ta | 1.3 | 14.0 |

Therefore, in case where the nanocrystalline structure part comprises fine grains with c axes oriented at random three-dimensionally in a perpendicular magnetic recording medium wherein the ferromagnetic layer consisting of the columnar structure part overlying the nanocrystalline structure part serves as the recording layer, it has become evident that the evaluation method related to this invention can quantitatively evaluate the magnetocrystalline anisotropy constant $K_u^{grain}$ of magnetic crystal grains of the columnar structure part and the thickness $d^{ini}$ of the nanocrystalline structure part regardless of the magnetic materials that compose the ferromagnetic layer.

**Industrial applicability**

As described above, the perpendicular magnetic recording medium related to this invention includes a ferromagnetic layer composed of the nanocrystalline structure part 13 comprising fine grains with c axes oriented at random three-dimensionally underlying the columnar structure part 14 which serves as the recording layer. Therefore, the evaluation method related to this invention that treats the perpendicular magnetic anisotropy constant $K_u^{\perp ini}$ of the nanocrystalline structure part 13 as zero can be applied. This enables to provide media that enable to determine clearly whether the fabricated media have the preferred magnetic property or not during the fabrication process of the media.

And by preparing a graph wherein the thickness $d^{Mag}$ of the ferromagnetic layer is plotted on the horizontal axis and the product ($K_u^{\perp} \times d^{Mag}$) of multiplying the perpendicular magnetic anisotropy constant $K_u^{\perp}$ by $d^{Mag}$ on the vertical axis relating to media fabricated according to a previously preferred medium design, a working curve consisting of a linear approximation can be obtained. Therefore, the media related to this invention leads to the construction of a production line that enables to control precisely the deposition conditions of the ferromagnetic layer including for example composition ratio in the film, fabrication temperature, process gas pressure, electric bias to be applied to the base substrate, etc. so that the media in the process of fabrication may have a $K_u^{grain}$ value meeting the medium design based on this working curve information.

The evaluation method related to this invention can analyze separately the thickness and magnetic property of the nanocrystalline structure part and the columnar structure part that could not be analyzed separately by the traditional evaluation methods by determining the magnetocrystalline anisotropy constant $K_u^{grain}$ of magnetic crystal grains of the columnar structure part and/or the thickness $d^{ini}$ of the nanocrystalline structure part from the perpendicular magnetic anisotropy constant $K_u^{\perp}$ and the thickness $d^{Mag}$ of the ferromagnetic layer since the perpendicular magnetic recording medium wherein the ferromagnetic layer composed of the nanocrystalline structure part underlying the columnar structure part serves as the recording layer includes the nanocrystalline structure part comprising fine grains with c axes oriented at random three-dimensionally. Since it is possible to control precisely the value of magnetic property of the fabricated media by evaluating precisely the magnetocrystalline anisotropy constant $K_u^{grain}$ of the magnetic crystal grains of the columnar structure part and the thickness $d^{ini}$ of the nanocrystalline structure part, the evaluation method related to this invention can contribute to the mass production of high quality media of a constant magnetic property.

**Claims**

1.  A perpendicular magnetic recording medium wherein a ferromagnetic layer comprising a nanocrystalline structure part and an overlying columnar structure part serves as a recording layer, wherein
    said nanocrystalline structure part comprises fine grains having c-axes oriented at random three-dimensionally.

2.  The perpendicular magnetic recording medium according to claim 1 wherein said nanocrystalline structure part directly overlies the base substrate.

3.  The perpendicular magnetic recording medium according to claim 1 wherein said nanocrystalline structure part overlies the base substrate through a or more metal base layer(s).

4.  The perpendicular magnetic recording medium according to claim 3 wherein at least one of said metal base layers is a soft magnetic film.

5.  The perpendicular magnetic recording medium according to claim 1 wherein said ferromagnetic layer is made of a material consisting mainly of Co and Cr.

6.  The perpendicular magnetic recording medium according to claim 2 or 3 where said base substrate is glass.

7. An evaluation method of the perpendicular magnetic recording medium wherein a ferromagnetic layer consisting of a nanocrystalline structure part and an overlying columnar structure part serves as a recording layer, wherein

when the thickness of said nanocrystalline structure part is defined as $d^{ini}$, the thickness of said ferromagnetic as $d^{Mag}$, the perpendicular magnetic anisotropy constant of said ferromagnetic layer as $K_u^{\perp}$, the magnetocrystalline anisotropy constant of magnetic crystal grains of said columnar structure part as $K_u^{grain}$,

said nanocrystalline structure part comprises fine grains having c-axes oriented at random three-dimensionally, and said $K_u^{grain}$ and/or said $d^{ini}$ are determined from said $K_u^{\perp}$ and said $d^{Mag}$.

8. The evaluation method of the perpendicular magnetic recording medium according to claim 7 wherein a relational expression $K_u^{\perp} \times d^{Mag} = K_u^{grain} \times (d^{Mag} - d^{ini})$ is used to determine said $K_u^{grain}$ and/or $d^{ini}$ from said $K_u^{\perp}$ and said $d^{Mag}$.

9. The evaluation method of the perpendicular magnetic recording medium according to claim 8 wherein $K_u^{grain}$ and/or $d^{ini}$ is or are determined by using the linear approximation of a graph in which said $d^{Mag}$ is plotted on the horizontal axis and the product of multiplying said $K_u^{\perp}$ by said $d^{Mag}$ are plotted on the vertical axis.

10. The evaluation method of the perpendicular magnetic recording medium according to claim 9 wherein $K_u^{grain}$ is determined from the gradient of said linear approximation.

11. The evaluation method of the perpendicular magnetic recording medium according to claim 9 wherein the value of $d^{ini}$ is determined from the point of intersection between the extension of said linear approximation and said horizontal axis.

12. The evaluation method of the perpendicular magnetic recording medium according to claim 9 wherein the distribution in the thickness direction of said nanocrystalline structure part is determined from the tail part of said linear approximation if such a tail part exists on the side of said linear approximation where the value of $d^{Mag}$ is smaller.

Fig. 1

Fig. 2

(a)

(b)

002

000

(c)

002

000

Fig. 3

Fig. 4

Fig. 5

Fig. 6

Ferrromagnetic layer/base substrate

$K_u^{\perp} \times d^{Mag}$ ($\times 10^7$ erg/cm$^3$ $\times$ nm)

$K_u{}^{grain}$

$d_{ini}$

Thickness of the ferromagnetic layer : $d^{Mag}$ (nm)

19

Fig. 7

Fig. 8

Fig. 9

Fig. 10

Fig. 11

Thickness of the ferromagnetic layer: $d^{Mag}$(nm)

## INTERNATIONAL SEARCH REPORT

| | International application No. |
|---|---|
| | PCT/JP01/02100 |

| A. CLASSIFICATION OF SUBJECT MATTER |
|---|
| Int.Cl⁷ G11B5/65, 5/667, 5/84 |

According to International Patent Classification (IPC) or to both national classification and IPC

| B. FIELDS SEARCHED |
|---|
| Minimum documentation searched (classification system followed by classification symbols)<br>    Int.Cl⁷ G11B5/65, 5/667, 5/84 |

Documentation searched other than minimum documentation to the extent that such documents are included in the fields searched
    Jitsuyo Shinan Koho      1922-1996     Toroku Jitsuyo Shinan Koho  1994-2001
    Kokai Jitsuyo Shinan Koho  1971-2001     Jitsuyo Shinan Toroku Koho  1996-2001

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP, 11-203653, A (NEC Corporation),<br>30 July, 1999 (30.07.99),<br>Par. No. [0007]; example   (Family: none) | 1,3-6 |
| X | JP, 11-232633, A (Hitachi, Ltd.),<br>27 August, 1999 (27.08.99),<br>example   (Family: none) | 1,3,5,6 |
| X | JP, 8-273140, A (Victor Company of Japan, Limited),<br>18 October, 1996 (18.10.96),<br>example   (Family: none) | 1,2,5,6 |
| A | WO, 95/03603, A1 (Migaku TAKAHASHI),<br>02 February, 1995 (02.02.95)<br>& EP, 710949, A1   & US, 5853847, A | 7-12 |
| A | WO, 96/27878, A1 (Migaku TAKAHASHI),<br>12 September, 1996 (12.09.96)<br>& EP, 817175, A1   & US, 6042939, A | 7-12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    08 June, 2001 (08.06.01) | Date of mailing of the international search report<br>    19 June, 2001 (19.06.01) |
|---|---|
| Name and mailing address of the ISA/<br>    Japanese Patent Office | Authorized officer |
| Facsimile No. | Telephone No. |

Form PCT/ISA/210 (second sheet) (July 1992)

EP 1 283 518 A1

## INTERNATIONAL SEARCH REPORT

| | International application No. |
|---|---|
| | PCT/JP01/02100 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | US, 5846648, A (Chen et al.),<br>08 December, 1998 (08.12.98)<br>& JP, 10-302242, A | 1-6 |

Form PCT/ISA/210 (continuation of second sheet) (July 1992)

26